Europäisches Patentamt

European Patent Office

Office européen des brevets

(19)

(11) Publication number: **0 036 927**
A2

(12) **EUROPEAN PATENT APPLICATION**

(21) Application number: **81100688.1**

(22) Date of filing: **30.01.81**

(51) Int. Cl.³: **B 01 D 13/00**
**A 61 M 1/03**
**//B01D53/22**

(30) Priority: **19.03.80 PC T/SE80/00083**

(43) Date of publication of application:
**07.10.81 Bulletin 81/40**

(84) Designated Contracting States:
**AT BE CH DE FR GB IT LI LU NL SE**

(71) Applicant: **GAMBRO AB**
**Box 10101**
**S-220 10 Lund(SE)**

(84) Designated Contracting States:
**SE**

(71) Applicant: **Gambro AG**
**c/o Camillo Andina Himmelrich 11**
**CH-6340 Baar(CH)**

(84) Designated Contracting States:
**BE CH DE FR GB IT LI LU NL AT**

(72) Inventor: **Riede, Gerhard**
**Möllevängsg. 7**
**S-235 00 Vellinge(SE)**

(72) Inventor: **Nilsson, Nils-Joel Eddie**
**Trastvägen 6**
**S-280 10 Sösdala(SE)**

(74) Representative: **Boberg, Gunnar HOLGER CRAFOORD**
**AB, Patent Department**
**Box 10101**
**S-220 10 Lund(SE)**

(54) **A device for the diffusion of substances between two fluids via semipermeable membranes.**

(57) A device for the diffusion of substances between two fluids via semipermeable membranes (2) which are arranged in a stack separated by spacer plates (1), which comprise through-holes (13, 23) connected to inlets and outlets respectively for the respective fluids, a first fluid of which is arranged so as to be conducted on one side of the respective membranes and a second fluid on the opposite side of the same membranes. Preferably the membranes (2) are arranged in pairs between the spacer plates (1). The inlet and/or the outlet (18), for at least one of the said fluids, is connected from the side to a duct (12) intersecting the stack and formed by the said through-holes (13).

The device is intended and foremost to be used as a so-called artificial kidney, the said fluids consisting of blood and dialysis liquid respectively.

EP 0 036 927 A2

Croydon Printing Company Ltd.

TITLE

## A DEVICE FOR THE DIFFUSION OF SUBSTANCES BETWEEN TWO FLUIDS VIA SEMIPERMEABLE MEMBRANES

### TECHNICAL FIELD

The present invention relates to a device for the diffusion of substances between two fluids via semipermeable membranes which are arranged in a stack separated by spacer plates which comprise through-holes connected to inlets and outlets respectively for the respective fluids, a first fluid of which is arranged so as to be conducted on one side of the respective membranes and a second fluid on the opposite side of the same membranes.

The device in accordance with the invention is intended foremost to be used for the purification of blood, that is to say as a so-called artificial kidney. However, it will be clear to those skilled in the art that the apparatus in accordance with the invention can also be used for many other purposes. It may be used for example for the oxygenation of blood. The first of the above-mentioned fluids will then consist of blood, whilst the other will consist of oxygen or an oxygen mixture. Alternatively the device, in accordance with the invention, may be used for the transfer of substances from one gas to another. The term fluid, as used in following description, means therefore gas as well as liquid.

### BACKGROUND ART

Apparatuses of the above-mentioned type are known in themselves and are described for example in Swedish patents 218 441, 301 029, 325 370, 314 167, 342 144, 355 293, 365 119, 393 534 and 407 900, which all show apparatuses comprising a stack of spacer plates with membranes, preferably arranged in pairs between them.

### DISCLOSURE OF INVENTION

The device in accordance with the invention is characterized in that the inlet and/or outlet for at least one of the said fluids is connected from the side to a duct intersecting the stack and formed by the said through-holes. This arrangement provides substantial advantages which will be evident from the following description. It is an appreciable advantage that the stack in its entirety including clamping elements for the same can be made lower than in conventional designs.

The membranes are preferably arranged in pairs between the spacer plates. This makes it possible to conduct the blood without contact with the plates between membranes in the individual pairs. It is also possible, however, to conceive designs with single membranes arranged between adjoining spacer plates.

The stack of spacer plates and membranes between them is arranged appropriately between a top plate and a bottom plate which may then include within them the inlet and outlet for the second fluid formed in conventional manner. If the last-mentioned inlet and outlet represent those requiring less space, the top and bottom plates can be made thinner than if they were to contain also the inlet and outlet requiring more space.

The stack of spacer plates and membranes between them can appropriately be given an elongated shape with tapering ends. In such a realization the inlet and/or outlet connected from the side to the said duct may be formed of a connecting nipple which is wholly inside the otherwise largest dimensions in lateral or in longitudinal direction of the device. This connecting nipple will then require no extra space, whilst being well protected at the same time.

In a preferred embodiment of the subject of the invention, an intermediate plate is arranged between the said top plate and the nearest spacer plate. This intermediate plate may be provided with an angle nipple which contains an angular duct, one end of which is connected to an inlet or an outlet and whose other end is connected to the duct intersecting the stack and formed by the said through-holes. In this manner an apparatus with a small number of seals is achieved.

A further advantage is obtained if the intermediate plates are patterned in substantially the same manner as the spacer plates on the side facing them. By imparting such a pattern to two intermediate plates, it becomes possible to economize on one spacer plate, so that the device as a whole can be made thinner.

Simple sealing conditions are achieved if the said angular nipple is provided with a lateral duct which connects the same directly to the inner side of the intermediate plate.

The stack of spacer plates and membranes between them is preferably gripped between the top plate and the bottom plate with the help of clamping rails arranged between grooves in the top and bottom plates. At least one of these clamping rails is provided appropriately with holes for connecting nipples to provide connection to the duct formed by the said through-holes. These connecting nipples are appropriately arranged so that they are fixed mechanically to the top and bottom plates and/or clamping rails, whilst they are liquid-tight against the spacer plates to provide connection to the duct formed in these by the said through-holes.

When two clamping rails arranged on opposite sides of a longitudinal apparatus are used, one of these clamping rails is provided appropriately with two connection nipples, whilst the other one is not provided with any. As a result the connections will be oriented substantially in the same direction, which constitutes an advantage in practical use.

## BRIEF DESCRIPTION OF DRAWINGS

In the following the invention will be described in greater detail with reference to the enclosed drawings, which show by way of example a preferred embodiment of the same.

Figure 1 shows a device in accordance with the invention seen from above.
Figure 2 shows the same device seen from the side.
Figure 3 shows a section along line III-III in figure 1.
Figure 4 shows a section along line IV-IV in figure 1.
Figure 5 shows an intermediate plate included in the device in accordance with the invention seen from underneath

Figure 6 shows the same intermediate seen from above.

Figure 7 shows a section along line VII-VII in figure 5.

Figure 8 shows a section along line VIII-VIII in figure 5.

Figure 9 shows a section along line IX-IX in figure 5.

Figure 10 shows a section along line X-X in figure 5.

Figure 11 finally shows the circular area XI from figure 6 detached and on a larger scale.

## BEST MODE OF CARRYING OUT THE INVENTION

The preferred embodiment shown as an example is intended first and foremost to be used as a so-called artificial kidney, that is to say for dialysis. It is described therefore in the following with reference to such a treatment.

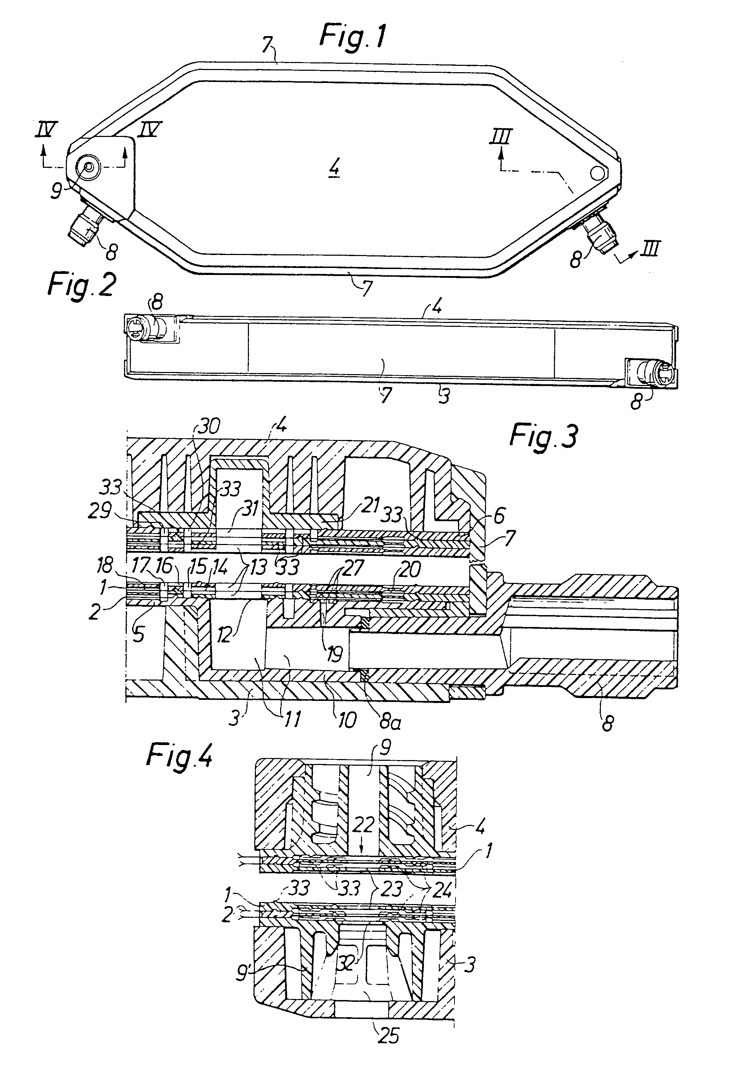

As is evident most clearly from figures 3 and 4, the device shown comprises a stack of spacer plates 1 with membranes 2 arranged in pairs between them. This stack is arranged between a bottom plate 3 and a top plate 4. Inside the last-named are situated a lower intermediate plate 5 and an upper intermediate plate 6.

The bottom plate 3 and the top plate 4 are held firmly clamped against the stack located between them with the help of clamping rails 7. The dialysis liquid is supplied and withdrawn via identical connecting nipples 8 fixed into holes in one of the clamping rails 7. In the same manner substantially identical inlets and outlets 9 for the blood are provided in the top and bottom plates. If the connection 9 shown in fig. 1 constitutes the inlet for the blood, a corresponding outlet (not shown) will thus be found on the opposite end of the bottom plate 3.

The apparatus as a whole has an elongated shape with tapering ends. The advantages of such a realization are demonstrated in greater detail in Swedish patents 393 534 and 407 900. Details from the apparatuses in accordance with the said patents may also be used in connection with the present apparatus.

The connection 8 for dialysis liquid is shown on a larger scale in figure 3 connected to an angle nipple 10 on the lower intermediate plate 5. This angle nipple contains an angular duct 11 which is connected with one end to a duct 12 formed by holes 13 in the spacer plates 1 and which runs transversely through the stack of spacer plates 1 and membranes 2. From the holes 13 the dialysis liquid flows through ducts 14 on the one side of the spacer plates, through through-holes 15 in the spacer plates and through ducts 16 on the opposite side of the spacer plates. Thanks to through-holes 17, the dialysis liquid is finally distributed to ducts 18 on the working surface proper of the spacer plates.

Numeral 8a designates a seal between the angle nipple 10 and the connecting nipple 8 which otherwise is fixed mechanically in the bottom plate 3.

In the example shown, the upper side of the lower intermediate plate 5 and the lower side of the upper intermediate plate 6 have been provided with a pattern substantially corresponding to that on the spacer plates. For conducting the dialysis liquid to the upper or inner side of the lower intermediate plate 5, a special lateral duct 19 exists which directly connects the angle duct 11 to the ducts 27 on the inside of the intermediate plate 5.

The duct 12 penetrating through the stack is shut off at the end opposite the angle nipple 10 by a closing plug 21.

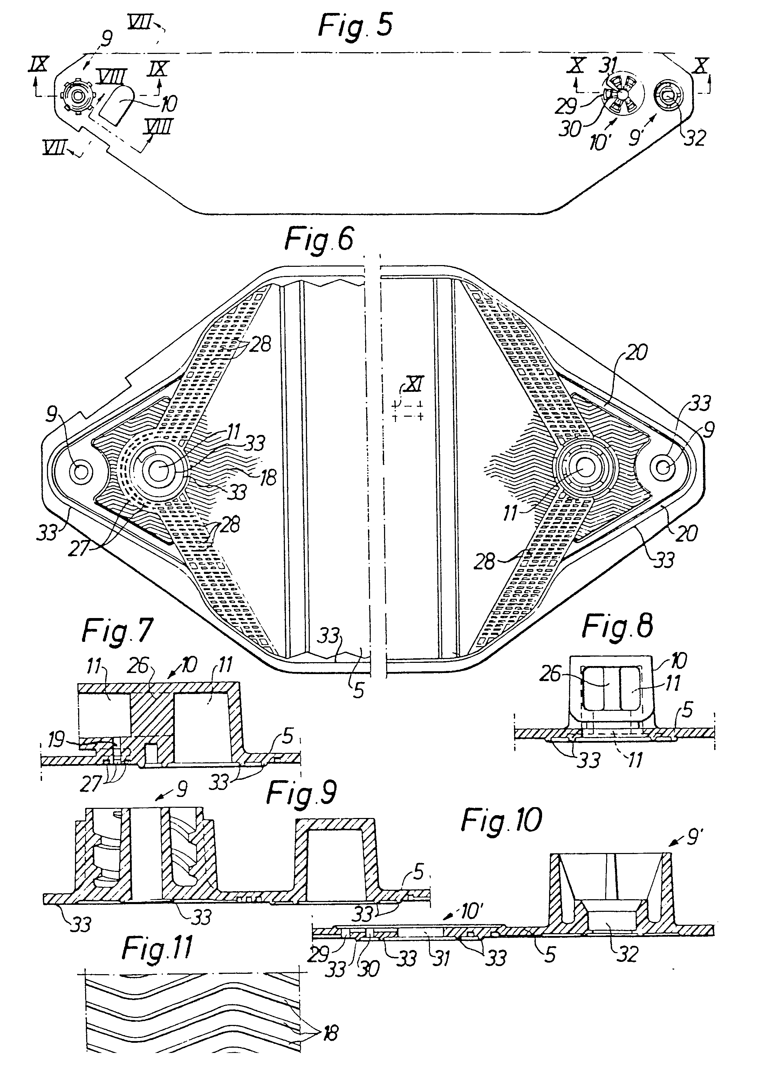

A blood outlet or blood inlet 9 is shown on a larger scale in figure 4. Here the blood is distributed through a duct 22, which is formed by holes 23 in the spacer plates 1 and by blood buttons 24 shown schematically. The latter, which are arranged between the membranes arranged in pairs, may be of the design, for example, which is described in Swedish patent 355 293. At the bottom the duct 22 is shut off by means of a plug 25. The blood is then conducted, as can best be seen from figure 6, between the membranes 2 along the ducts 20, and is then distributed on the working surface proper by virtue of the V-shaped duct system 28.

In figures 5-11 the lower intermediate plate 5 is shown in greater detail. Since the upper intermediate plate 6 by and large corresponds to the lower one, there is no need to show or describe it too in greater detail. The spacer plates may be designed substantially in accordance with the upper side of the intermediate plate 5 shown, that is to say largely in accordance with figures 6 and 11. There is no need here either, therefore, for a detailed description.

The angle nipple10 with angle duct 11 and lateral duct 19 can best be seen in figures 7 and 8. As is evident from these figures, the angle duct 11 is partly divided into two ducts by an inner partition 26. The lateral duct 19 ends in a duct system 27, which can also be seen in fig. 6, surrounding the one end of the angle duct 11, and in fig. 3. From the duct system 27 the dialysis liquid issues into a V-shaped duct system 28 and via this into the ducts 18 in the working surface proper of the upper surface of the intermediate plate 5. In the same manner the dialysis liquid issues into corresponding ducts 18 in the spacer plates 1 designed substantially in the same manner.

In figure 5 is shown the lower intermediate plate 5 seen from underneath. On the left-hand side in the figure an angle nipple 10 and a blood connection 9 can be discerned. The latter corresponds by and large to the connection 9 shown in figure 4 seen from above.

On the right-hand side in figure 5, end closures for the ducts 12 or 23 can be seen. They are designated here by numerals 10' and 9' respectively. In the duct closure 10' through-openings 29, 30 and 31 are present, which can also be seen in figure 3. The duct closure 9' comprises an oval hole 32 and this can also be seen in figure 4 inside the plug 25.

The hole 32 is also evident in figure 10, where the through-openings 29, 30 and 31 are also noticeable.

Numeral 33 generally designates sealing beads, adapted so as to press together in a tight manner the membranes arranged in pairs, in order to prevent blood and dialysis liquid from becoming mixed. At the same time they seal the apparatus towards the outside.

Other details shown on the drawings should be fairly self-explanatory to those skilled in the art, or they are of minor importance in respect of the invention and do not, therefore, require detailed description.

Naturally, the invention is not limited exclusively to the embodiment described above, but may be varied within the scope of the following claims. For example, the apparatus shown may be combined with one or more details from the aforementioned Swedish patents, which, together with the present application, describe a series of apparatuses which can be said to form a joint chain of development.

## CLAIMS

1. A device for the diffusion of substances between two fluids via semipermeable membranes (2), which are arranged in a stack separated by spacer plates (1) which comprise through-holes (13, 23) connected to inlets and outlets (8, 9) respectively for the respective fluids, a first fluid of which is arranged so as to be conducted on one side of the respective membranes and a second fluid on the opposite side of the same membranes, characterised in that the inlet and/or outlet ( 8) for at least one of the said fluids is connected from the side to a duct (12) intersecting the stack and formed by the said through-holes (13).

2. A device in accordance with claim 1, characterised in that the membranes (2) are arranged in pairs between the spacer plates (1).

3. A device in accordance with claim 1, where the stack of spacer plates (1) and membranes (2) between them is arranged between a top plate (4) and a bottom plate (13), characterised in that within them these enclose the inlet and outlet (8, 9) for the second fluid.

4. A device in accordance with claim 1, where the stack of spacer plates (1) and intermediate membranes (2) has an elongated shape with tapering ends, characterised in that the inlet and/or outlet (8) connected to the said duct (12) is formed by a connecting nipple which is wholly inside the otherwise largest dimensions in lateral direction or longitudinal direction of the device.

5. A device in accordance with claim 3 with an intermediate plate (5 and/or 6) arranged between the top plate (4) and the nearest spacer plate (1) and/or between the bottom plate (3) and the nearest spacer plate (1), characterised by an angle nipple (10) arranged on this intermediate plate (5 and/or 6) which contains an angular duct (11), whose one end is connected to an inlet or an outlet (8) and whose other end is connected to the duct (12) intersecting the stack and formed by the said through-holes (13).

6. A device in accordance with claim 5, characterised in that the said

intermediate plates (5 and/or 6) are patterned substantially in the same manner as the spacer plates (1) on the side facing them, which are separated from them by at least one membrane (2).

7.    A device in accordance with claim 5 and 6, <u>characterised</u> in that the said angle duct (11) is provided with a lateral duct (19) which connects it directly to the inner side of the intermediate plate (5 and/or 6).

8.    A device in accordance with anyone of the preceding claims where the stack of spacer plates (1) and membranes (2) between them is gripped between a top plate (4) and a bottom plate (3) with the help of clamping rails (7) arranged between grooves in the top and bottom plates, <u>charac-</u> <u>terised</u> in that at least one of these clamping rails (7) is provided with holes for connecting nipples (8) to provide connection to the duct (12) formed by the said through-holes (13).

9.    A device in accordance with claim 8, characterised in that the said connecting nipples (8) are fixed mechanically to the top and bottom plates (4, 3) and/or the clamping rails (7), whilst they are adapted so as to be liquid-tight against the spacer plates (1) to provide connection to the duct (12) formed in these by the said through-holes (13).

10.    A device in accordance with claim 8 or 9, comprising two clamping rails (7), characterised in that one clamping rail comprises holes for two connecting nipples (8), whilst the other does not comprise any such holes, as a result of which the connections will be oriented substantially in the same direction.

1/2

**Fig.1**

7

IV  IV  III

4

9  III

8  8

**Fig.2**

8  4

7  3  8

**Fig.3**

30  4

33  33

29  31  21  33  6

7

18  17 16  15 14  13 33  27  20

1

2

5  12  19

3  11  10  8a  8

**Fig.4**

9

22  4

1

1  33  33  23  24

2

9'  32  3

25

2/2

Fig.5

Fig.6

Fig.7

Fig.8

Fig.9

Fig.10

Fig.11